# EUROPEAN PATENT SPECIFICATION

(11) **EP 2 015 597 B1**
(45) Date of publication and mention of the grant of the patent: **25.06.2014**
(21) Application number: 07741973.7
(22) Date of filing: 19.04.2007
(51) Int. Cl.: H04W 48/12, H04W 88/08

(54) **BASE STATION AND COMMUNICATION METHOD**
BASISSTATION UND KOMMUNIKATIONSVERFAHREN
STATION DE BASE ET PROCÉDÉ DE COMMUNICATION

(30) Priority: 01.05.2006 JP 2006127992; 19.06.2006 JP 2006169445
(43) Date of publication of application: 14.01.2009
(60) Divisional application: 13157386.7
(73) Proprietor: NTT DOCOMO, INC., Chiyoda-ku Tokyo 100-6150 (JP)
(72) Inventor: TANNO, Motohiro, Tokyo 100-6150 (JP); KISHIYAMA, Yoshihisa, Tokyo 100-6150 (JP); HIGUCHI, Kenichi, Tokyo 100-6150 (JP); SAWAHASHI, Mamoru, Tokyo 100-6150 (JP); ISHII, Minami, Tokyo 100-6150 (JP)
(74) Representative: HOFFMANN EITLE
(86) International application number: PCT/JP2007/058537
(87) International publication number: WO 2007/129539

(56) References cited:
- EP-A1- 1 565 020
- WO-A1-00/72609
- WO-A1-2004/089013
- JP-A- 2003 023 430
- JP-A- 2004 356 684
- JP-A- 2005 260 426
- JP-A- 2006 020 350
- JP-A- 2006 080 701

## Description

### BACKGROUND OF THE INVENTION

### 1. Field of the Invention

The present invention relates to a base station for generating and transmitting system information to a mobile station. The present invention also relates to a communication method of communicating system information in a communication system including the base station and the mobile station.

### 2. Description of the Related Art

In W-CDMA (Wideband Code Division Multiple Access), a mobile station decodes broadcast channel information on a BCH (Broadcast Channel) and retrieves system information before establishing a radio link between a base station and the mobile station. The mobile station uses the system information to establish the radio link to the base station.

Document WO 00/72609 A1 relates to a cellular telecommunications system or network. In each cell, a base station transmits or broadcasts currently valid tag values. System information blocks including the system information parameters themselves are also broadcast by base stations. A mobile station receiving a valid tag value from a base station determines whether or not it has to read system information block(s) corresponding to that tag depending upon whether the base station has already stored or cached such block(s) corresponding to the tag value. This may conserve radio resources and reduce battery consumption.

Before entering soft handover or when in intermittent reception mode for standby, the mobile station needs to detect a cell with the smallest path-loss (a cell with the second smallest path-loss when entering soft handover mode). The process for establishing the radio link in this manner is referred to as a cell search (see "W-CDMA MOBILE COMMUNICATIONS SYSTEM" edited by Keiji Tachikawa, Japan, March 15, 2002, pages 35-36 ).

### SUMMARY OF THE INVENTION

### [Problem(s) to be solved by the Invention]

In W-CDMA, however, various kinds of system information are transmitted on a single broadcast channel and the broadcast channel information increases in size (in the number of bits or in transmission time). Accordingly, the mobile station needs to receive the whole broadcast channel information, which presents a problem in that it takes considerable time for the cell search.

In addition, the mobile station cannot recognize whether it detects a cell until after receiving the whole broadcast channel information. Accordingly, it takes considerable time each time the mobile station repeats the cell search. Particularly when the mobile station is situated outside the coverage area, it takes considerable time to repeat the cell search, which presents a problem of increasing power consumption in the mobile station.

A cell search during communication in the case of handover needs a fast cell search. However, considerable time for the cell search increases time required for handover, which presents a problem of degrading communication quality such as throughput.

On the other hand, system information includes sector-specific (cell-specific) system information, base station-specific system information, upper node-specific system information, location registration area-specific information, and system-specific system information. When this system information is transmitted on a single broadcast channel, there is a problem in that the broadcast channel information increases in size (in the number of bits or in transmission time).

For example, when the mobile station changes sectors covered by the same base station and receives various kinds of system information on a single broadcast channel, the mobile station also receives base station-specific system information, which is not always needed. For example, when the mobile station is situated at a sector boundary, the mobile station only receives broadcast channel information from one sector while the same piece of mobile station-specific system information is transmitted from both sectors. Accordingly, there is a problem in that broadcast channel information from the other sector causes interference.

In view of the aforementioned problems in the related art, it is a general object of the present invention to reduce the amount of information received by a mobile station on a broadcast channel.

### [Means for solving the Problem]

This object of the invention is solved by the subject matter of the independent claims, advantageous embodiments of the invention are disclosed in the dependent claims.

In one aspect, there is provided a base station, including:
a system information generating unit configured to generate system information;
a system information categorizing unit configured to categorize the system information into multiple pieces of system information; and a multiplexing unit configured to multiplex the categorized multiple pieces of system information into multiple channels or multiple blocks.

In another aspect of the present invention, there is provided a communication method of communicating system information in a communication system including a base station and a mobile station, including the steps of:
at the base station,
generating system information;
categorizing the system information into multiple pieces of system information;
multiplexing the categorized multiple pieces of system information into multiple channels or multiple blocks;
transmitting the system information on the multiple channels or the multiple blocks; and
at the mobile station,
receiving system information included in a portion of the multiple channels or the multiple blocks.

### [Effect of the Invention]

According to an embodiment of the present invention, it is possible to reduce the amount of information received by a mobile station on a broadcast channel.

### BRIEF DESCRIPTION OF THE DRAWINGS

Fig. 1 shows a block diagram of a base station in accordance with a first or second embodiment of the present invention.
Fig. 2 shows a block diagram of a mobile station in accordance with the first or second embodiment of the present invention.
Fig. 3 shows three schemes used for transmitting multiple pieces of broadcast channel information on frequency blocks.
Fig. 4 shows a block diagram of a base station in accordance with a third embodiment of the present invention.
Fig. 5 shows a block diagram of a mobile station in accordance with the third embodiment of the present invention.
Fig. 6 shows a block diagram of another mobile station in accordance with the third embodiment of the present invention.

### DESCRIPTION OF THE PREFERRED EMBODIMENTS

### [Description of Notations]

10, 30 base station
101, 301 system information generating unit
103, 303 system information categorizing unit
105, 305 coding unit
107, 307 modulating unit
109, 309 multiplexing unit
111, 311 serial-parallel converting unit
113, 313 spreading code generating unit
115, 315 spreading code multiplying unit
117, 317 combining unit
20 mobile station
201a primary broadcast channel information receiving unit
201b secondary broadcast channel information receiving unit
203 cell search unit
205 secondary broadcast channel information extracting unit
40, 50 mobile station
401a, 501a sector-specific broadcast channel information receiving unit
401b, 501b base station-specific broadcast channel information receiving unit
401c, 501c upper node-specific broadcast channel information receiving unit
401d, 501d location registration area-specific broadcast channel information receiving unit
401e, 501e system-specific broadcast channel information receiving unit
403 channel configuration information storing unit
501 primary broadcast channel information receiving unit
503 channel configuration information extracting unit

### [Best Mode of Carrying Out the Invention]

With reference to the accompanying drawings, a description is given below with regard to preferred embodiments of the present invention.

### [First Embodiment]

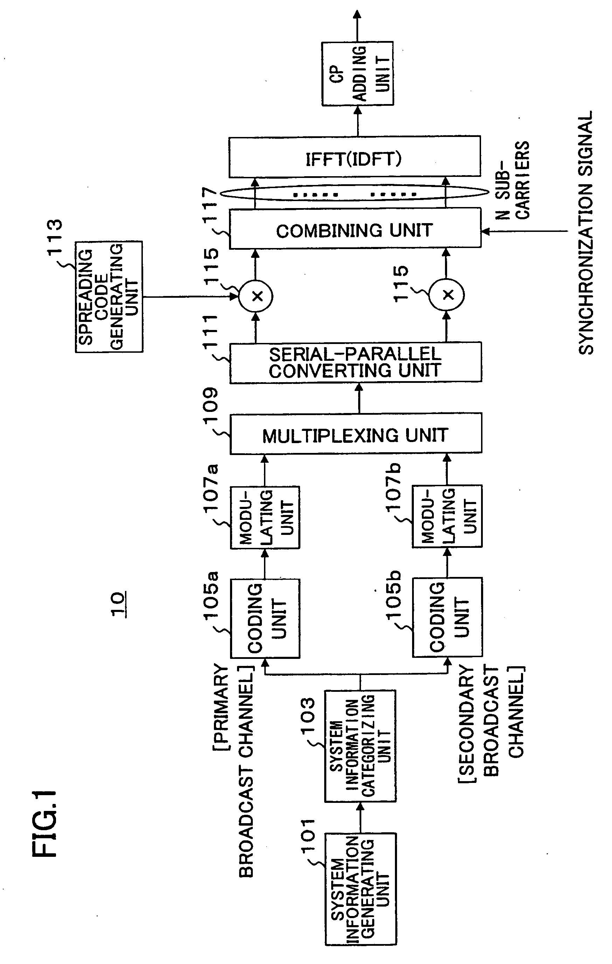

In a first embodiment of the present invention, a base station transmits system information using multiple broadcast channels or multiple blocks (referred to as broadcast channel blocks) which are derived by dividing a broadcast channel. Fig. 1 shows a block diagram of a base station 10 in accordance with the first embodiment of the present invention.

The base station 10 transmits system information to a mobile station on a primary broadcast channel and a secondary broadcast channel. The mobile station receives primary broadcast channel information to perform a cell search. As used herein, the "cell search" refers to procedures for detecting a cell and retrieving minimum system information. Since the mobile station needs to receive primary broadcast channel information upon establishing a connection with the base station 10, a frequency block and timing for the primary broadcast channel have to be determined in advance. Then, the mobile station receives secondary system information to retrieve various kinds of system information.

The base station 10 includes a system information generating unit 101, a system information categorizing unit 103, coding units 105, modulating units 107, a multiplexing unit 109, a serial-parallel converting unit 111, a spreading code (scrambling code) generating unit 113, spreading code (scrambling code) multiplying units 115, and a combining unit 117.

The system information generating unit 101 generates system information to be transmitted to the mobile station. The system information includes system information required for the cell search and system information not required for the cell search (system information other than the system information required for the cell search).

The system information required for the cell search includes the following information:
- SFN (System Frame Number): a radio frame number;
- system bandwidth: a transmission bandwidth for the base station;
- network ID: information about an operator;
- cell ID: information used for identifying a cell in the base station; and
- the number of transmitting antennas: the number of transmitting antennas in the base station in the case of MIMO transmission.

The system information not required for the cell search includes the following information:
- timer value or parameter value for the mobile station: the time interval of the cell search operations in the mobile station, the time interval of received signal levels reported from the mobile station to the base station, initial transmission power for the mobile station, or the like;
- location registration area information: location registration area number, or the like;
- cell search information: a threshold for the received signal level which is used for the mobile station to perform the cell search;
- neighboring cell information: cell IDs of the neighboring cells, a system bandwidth, a broadcast channel bandwidth, the number of transmitting antennas, timing information (time lag among base stations), transmission power, the number of sectors, or the like;
- restriction information: information about call restriction;
- the amount of uplink interference: information about the amount of interference detected by the base station;
- positioning information: latitude and longitude information, or the like;
- channel configuration information in the cell: information about a paging channel, an L1/L2 control channel, or the like other than the broadcast channel;
- core network information: information about a core network connected to the base station; and
- measurement information for the mobile station: measurement information such as received power, SIR (Signal to Interference Ratio), or the like.

The system information categorizing unit 103 categorizes the system information into the system information required for the cell search (information to be transmitted on the primary broadcast channel) and the system information not required for the cell search (information to be transmitted on the secondary broadcast channel). The system information categorizing unit 103 may incorporate channel information (a frequency block and timing) about the secondary broadcast channel into information to be transmitted on the primary broadcast channel.

The system information required for the cell search is encoded by the coding unit 105a and then modulated by the modulating unit 107a. In the same manner, the system information not required for the cell search is encoded by the coding unit 105b and then modulated by the modulating unit 107b.

The modulated system information is multiplexed by the multiplexing unit 109 into the primary broadcast channel and the secondary broadcast channel, and then converted by the serial-parallel converting unit 111 into N information symbol sequences on the frequency axis. The converted N information symbol sequences are arranged on the frequency axis.

The symbol sequences with a sequence length N are multiplied by N spreading code multiplying units 115 with spreading codes (scrambling codes) supplied by a spreading code generating unit 113 in the frequency direction, and then the multiplied symbol sequences are supplied to a combining unit 117.

The combining unit 117 multiplexes the multiplied symbol sequences with the sequence length N into a certain subcarrier among N subcarriers corresponding to the synchronization signal. An IFFT (Inverse Fast Fourier Transform) unit transforms N symbols into orthogonal multicarrier signals. A cyclic prefix (CP) adding unit inserts CPs into the multicarrier signals for each Fourier target time period. Then, the base station 10 generates radio signals from the multicarrier signals supplied by the CP adding unit and transmits them to the air.

The base station 10 may transmit primary broadcast channel information in a shorter time interval and transmit secondary broadcast channel information in a longer time interval. Since the mobile station first needs to receive primary broadcast channel information, it is preferable for the base station 10 to transmit the primary broadcast channel information in a shorter time interval, in order to reduce time for receiving system information. It should be noted that transmitting primary broadcast channel information in a shorter time interval may not have significant effects on overhead, because the amount of primary broadcast channel information is smaller than the amount of secondary broadcast channel information.

Also, transmitting secondary broadcast channel information in a longer time interval can reduce overhead, because the mobile station need not quickly receive secondary broadcast channel information.

When a common spreading code (scrambling code) is used within the base station 10, signals from adjacent sectors are not subjected to interference but are combined when signals transmitted from each sector are received (soft-combining). Soft-combining may be used for both the primary broadcast channel and the secondary broadcast channel. Using soft-combining for both the channels can increase the effect of combining received signals. Alternatively, soft-combining may be used only for the primary broadcast channel. Using soft-combining for the primary broadcast channel can efficiently increase the effect of combining received signals, because primary broadcast channel information is important and includes various kinds of common information for the base station. Alternatively, soft-combining may be used only for the secondary broadcast channel. Using soft-combining for the secondary broadcast channel can efficiently increase the effect of combining received signals, when various kinds of common information for the base station is included in the secondary broadcast channel information.

The primary broadcast channel information may be categorized into a portion to be soft-combined and the other portion not to be soft-combined. For example, common information for the base station may be soft-combined using the common spreading code.

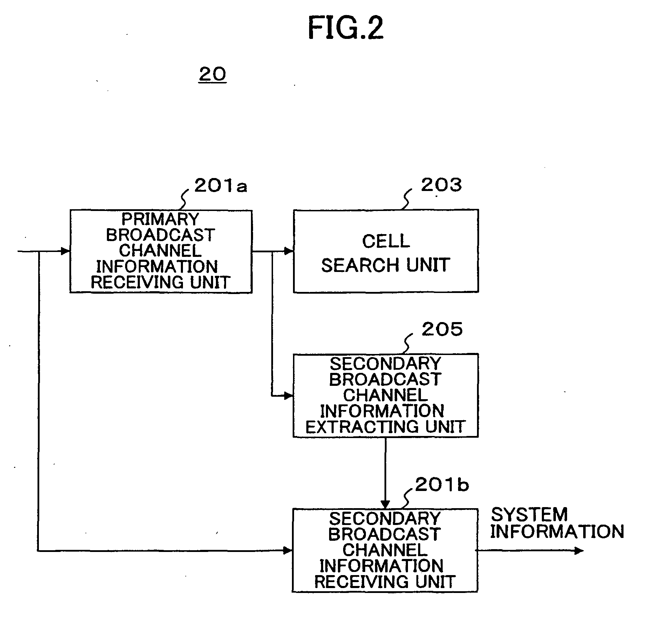

Fig. 2 shows a block diagram of a mobile station 20 in accordance with the first embodiment of the present invention.

The mobile station 20 includes a primary broadcast channel information receiving unit 201a, a secondary broadcast channel information receiving unit 201b, a cell search unit 203, and a secondary broadcast channel information extracting unit 205.

The primary broadcast channel receiving unit 201a receives primary broadcast channel information transmitted at a predetermined frequency block and timing.

The cell search unit 203 extracts system information required for the cell search which is included in the primary broadcast channel information and then performs the cell search. When the primary broadcast channel information includes channel information about the secondary broadcast channel, the secondary broadcast channel information extracting unit 205 extracts channel information (a frequency block and timing) about the secondary broadcast channel.

The secondary broadcast channel receiving unit 201b uses the extracted channel information about the secondary broadcast channel to receive secondary broadcast channel information and to extract system information not required for the cell search.

According to the first embodiment of the present invention, the mobile station may only receive primary broadcast channel information upon the cell search, because the base station transmits system information required for the cell search on the primary broadcast channel. Therefore, it is possible to reduce the amount of information received by the mobile station on the primary broadcast channel and to reduce time for the cell search.

Although broadcast channel information is categorized into primary broadcast channel information and secondary broadcast channel information in the first embodiment, system information to be transmitted on the secondary broadcast channel may be further categorized into secondary broadcast channel information and shared data channel information.

In addition, the broadcast channel information may be categorized into multiple blocks (primary broadcast channel block and secondary broadcast channel block). Even though the single broadcast channel is used, the mobile station can receive system information included in a primary broadcast channel block. This approach can achieve the effect similar to the first embodiment.

### [Second Embodiment]

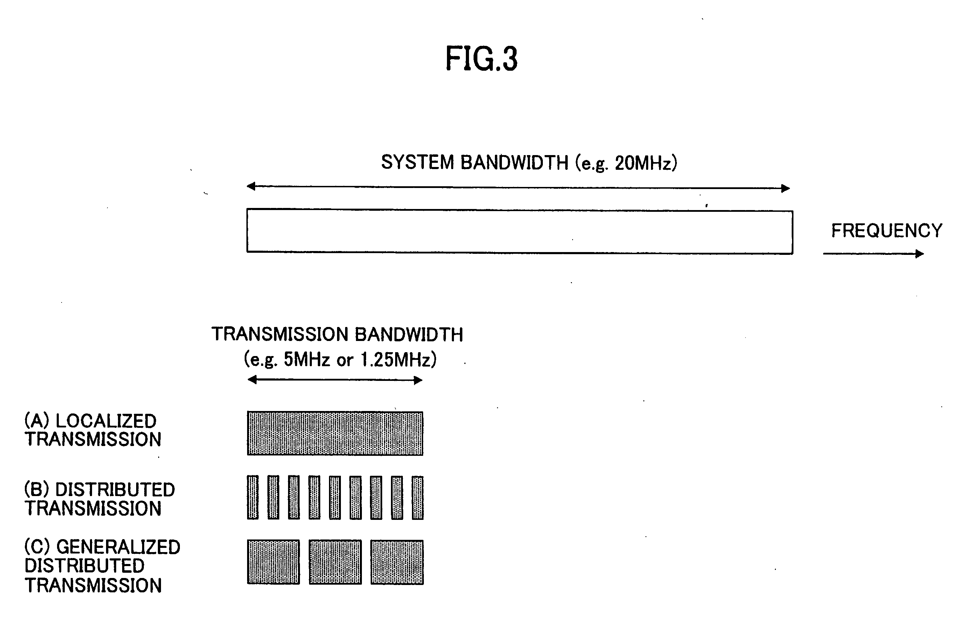

In a second embodiment of the present invention, a base station uses multiple frequency blocks to transmit broadcast channel information including primary broadcast channel information and secondary broadcast channel information. The base station in accordance with the second embodiment also has the same structure as shown in Fig. 1. The combining unit 117 multiplexes symbol sequences into multiple frequency blocks as shown in Fig. 3. Fig. 3 shows three schemes used for transmitting multiple pieces of broadcast channel information on multiple frequency blocks.

In 3GPP Evolved UTRA and UTRAN, the system bandwidth can be between 1.25 MHz and 20 MHz. In the second embodiment, the whole system bandwidth is divided into multiple frequency blocks and broadcast channel information is transmitted on frequency blocks with some space therebetween, in order to improve reception quality due to the frequency diversity effect.

In order to achieve the frequency diversity effect, a localized transmission scheme, a distributed transmission scheme, or a generalized distributed transmission scheme may be used. The localized transmission scheme uses a portion of the system bandwidth. The distributed transmission scheme uses comb-shaped frequency blocks. The generalized distributed transmission scheme uses frequency blocks with some space therebetween.

According to the second embodiment of the present invention, it is possible to reduce the amount of information received by the mobile station on the primary broadcast channel and to reduce time for the cell search. In addition, it is possible to improve reception quality by means of the frequency diversity effect.

### [Third embodiment]

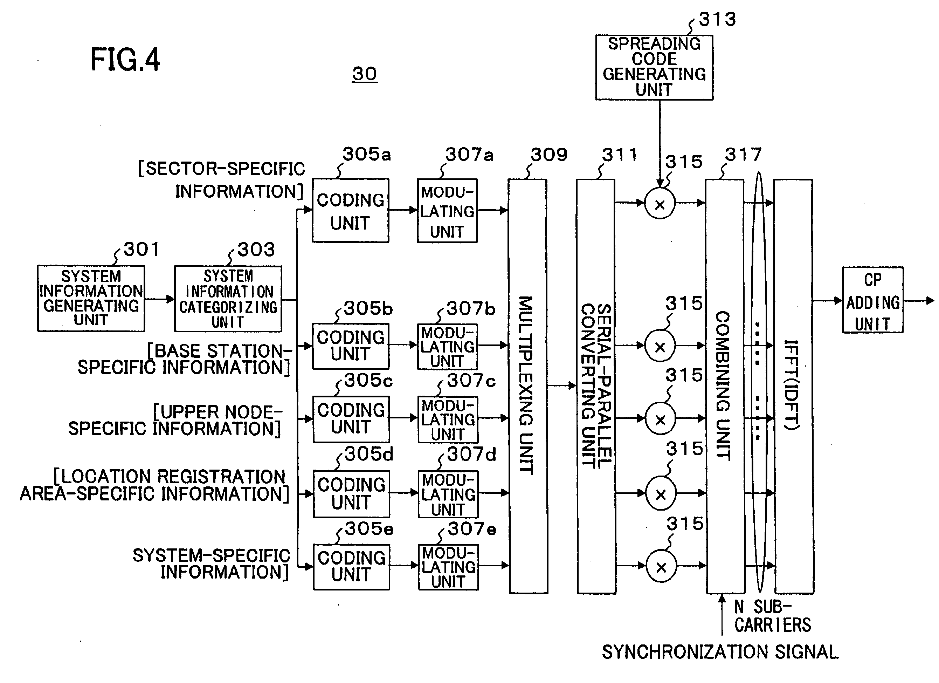

In a third embodiment of the present invention, a base station transmits system information using multiple broadcast channels or multiple blocks (referred to as broadcast channel blocks) which are derived by dividing a broadcast channel. Fig. 4 shows a block diagram of a base station 30 in accordance with the third embodiment of the present invention.

The base station 30 categorizes system information into sector-specific (cell-specific) information, base station-specific information, upper node-specific information, location registration area-specific information, and system-specific information. Then, the base station 30 transmits the system information to a mobile station on multiple broadcast channels or multiple broadcast channel blocks. The mobile station only receives necessary information on the multiple broadcast channels or multiple broadcast channel blocks. For example, when the mobile station changes sectors covered by the same base station, the mobile station only receives sector-specific information without receiving base-station specific information.

The base station 30 includes a system information generating unit 301, a system information categorizing unit 303, coding units 305, modulating units 307, a multiplexing unit 309, a serial-parallel converting unit 311, a spreading code generating unit 313, spreading code multiplying units 315, and a combining unit 317.

The system information generating unit 301 generates system information to be transmitted to the mobile station. The system information can be categorized into multiple pieces of system information, each of which is specific to each component in the radio network configuration. For example, the system information can be categorized into sector-specific information, base station-specific information, upper node-specific information, location registration area-specific information, and system-specific information, as shown in Table 1. As used herein, "an upper node" refers to an apparatus installed at an upper level of the base station, such as an access router or a radio network controller.

**Table 1. Example categories of system information**

| system information | category |
|---|---|
| SFN (System Frame Number) | sector-specific or base station-specific information |
| system bandwidth (overall transmission bandwidth) | base station-specific information |
| network ID (PLMN identities of neighboring cells) | system-specific information |
| timer value or parameter value for a mobile station (UE timers and constraints in an idle mode) | system-specific information |
| location registration | location registration |
| area information | area-specific information |
| sector (cell) ID (cell identity) | sector-specific information |
| cell selection information (parameters for cell selection and re-selection) | sector-specific or base station-specific information |
| restriction information (cell access restriction) | sector-specific information |
| channel configuration information in the cell (configuration of common physical channels in the cell) | sector-specific or base station-specific information |
| amount of uplink interference | sector-specific information |
| measurement information for the mobile station (measurement control system information) | sector-specific or base station-specific information |
| core network information | base station-specific, system-specific, or upper node-specific information |
| positioning information (UE positioning information) | sector-specific or mobile station-specific information |

The system information categorizing unit 303 categorizes the system information into multiple pieces of system information, each of which is specific to each component in the radio network configuration. The coding units 305 through the CP adding units operate in the same manner as the first embodiment shown in Fig. 1.

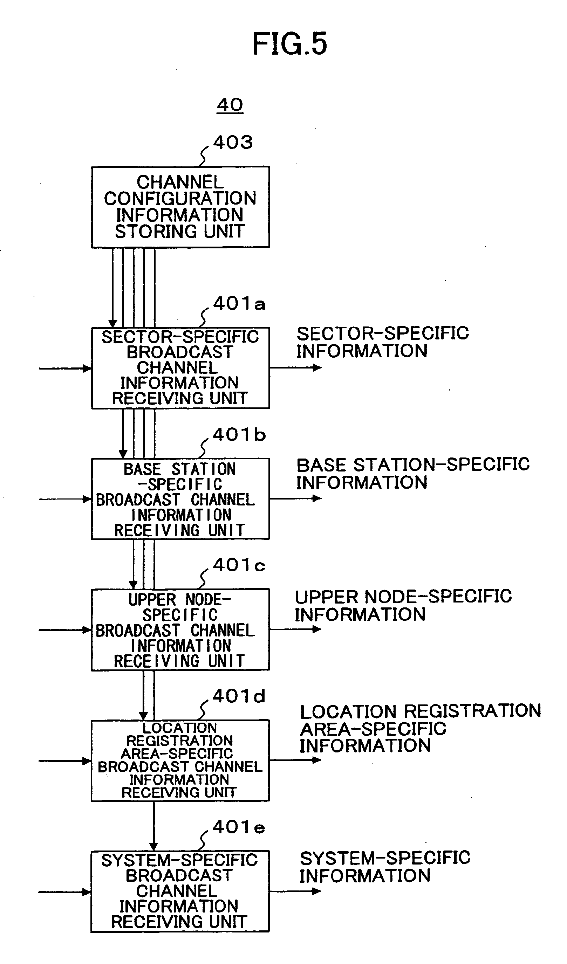

The base station 30 may categorize the system information based on predetermined configuration information about the broadcast channel which is stored in both the base station and the mobile station. For example, channel information (a frequency block and timing) about the broadcast channel for sector-specific information may be determined in advance. A mobile station 40 corresponding to this base station 30 is shown in Fig. 5. The mobile station 40 includes a sector-specific broadcast channel information receiving unit 401a, a base station-specific broadcast channel information receiving unit 401b, an upper node-specific broadcast channel information receiving unit 401c, a location registration area-specific broadcast channel information receiving unit 401d, a system-specific broadcast channel information receiving unit 401e, and a channel configuration information storing unit 403. Each of the broadcast channel information receiving units 401a-401e refers to the channel configuration information storing unit 403 as needed and receives necessary broadcast channel information. For example, when the mobile station 40 changes sectors covered by the same base station, the mobile station 40 only receives sector-specific broadcast channel information.

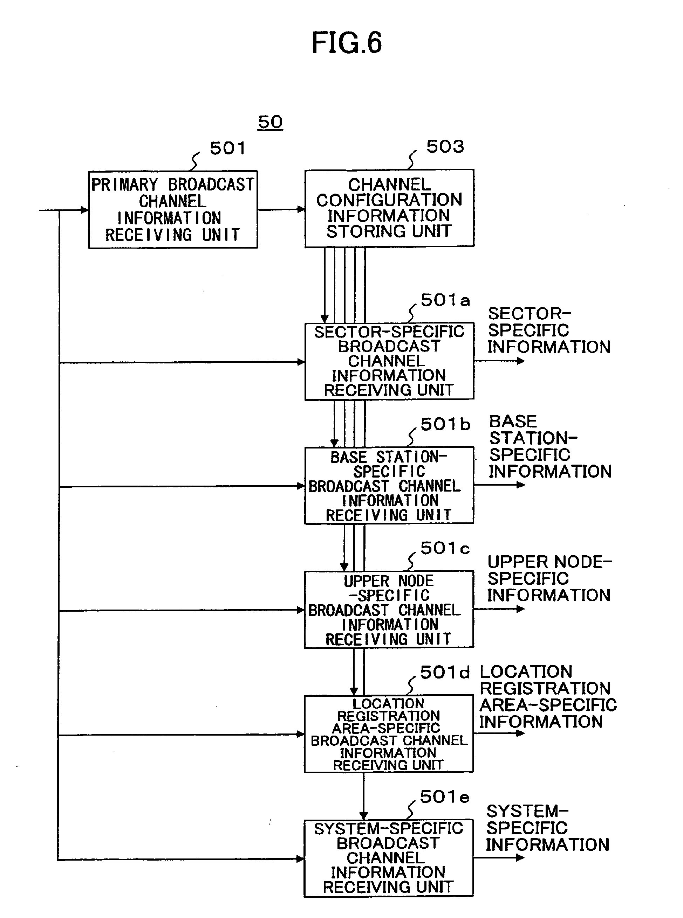

Alternatively, the base station 30 may add configuration information about the broadcast channel to the primary broadcast channel information (system information to be transmitted on the primary broadcast channel) as described in the first embodiment. A mobile station 50 corresponding to this base station 30 is shown in Fig. 6. The mobile station 50 includes a primary broadcast channel information receiving unit 501, a sector-specific broadcast channel information receiving unit 501a, a base station-specific broadcast channel information receiving unit 501b, an upper node-specific broadcast channel information receiving unit 501c, a location registration area-specific broadcast channel information receiving unit 501d, a system-specific broadcast channel information receiving unit 501e, and a channel configuration information extracting unit 503. The primary broadcast channel information receiving unit 501 receives primary broadcast channel information. Then, the channel configuration information extracting unit 503 extracts configuration information about the broadcast channel from the primary broadcast channel information. Each of the broadcast channel information receiving units 501a-501e refers to the configuration information about the broadcast channel as needed and receives broadcast channel information.

Alternatively, the configuration information about the broadcast channel may specify sector-specific system information, base station-specific system information, or the like. In this case, the specified system information may be determined in advance or transmitted on the primary broadcast channel.

The spreading code generating unit 313 generates a common spreading code for the same piece of system information. For example, the spreading code generating unit 313 generates a common spreading code for base station-specific information, because the base station-specific information is common to multiple sectors covered by the base station 30. In this manner, different spreading codes among sectors are used for sector-specific information and a common spreading code within the base station 30 is used for base station-specific information which does not include sector-specific information. When a common spreading code is used within the base station 30, signals from adjacent sectors are not subjected to interference but are combined when signals transmitted from each sector are received (soft-combining).

When soft-combining is used, a pilot channel corresponding to radio resources to be soft-combined may be common to multiple sectors. For example, a pilot channel controlling unit may be provided to the base station 30, in order to generate the pilot channel which is common to multiple sectors. Providing the pilot channel controlling unit can increase a gain in soft-combining. In the case where the pilot channel is generated which is common to multiple sectors, some portions of frequency blocks for the pilot channel may be common to multiple sectors, while the other portions may be independent. Providing both the pilot channel which is common to multiple sectors and the pilot channel which is independent among multiple sectors allows the mobile station to distinguish processes which are common to multiple sectors and processes which are independent among multiple sectors. For example, the processes which are independent among multiple sectors include reception measurement at the mobile station, reception of L1/L2 control channels, and so on.

Alternatively, the pilot channels may be orthogonalized among multiple sectors. The mobile station can receive the orthogonalized pilot channels and combine them.

When soft-combining is used, it is preferable that radio resources (frequency blocks) used in each sector should be common.

In addition, a CDD (Cyclic Delay Diversity) scheme can be applied to radio resources to be soft-combined. For example, a CDD unit may be provided to the base station 30, in order to apply CDD to the radio resources to be soft-combined. Providing the CDD unit can achieve a higher diversity effect.

In the same manner, a common spreading code may be used for upper-node specific information among multiple base stations belonging to the same upper node. This enables soft-combining among multiple base stations.

When soft-combining is used, the same spreading code may not be always used among multiple sectors or multiple base stations, but different spreading codes may be used. When different spreading codes are used, the mobile station can independently receive multiple pieces of broadcast channel information with the same content and combine them. This approach can achieve the effect similar to the use of soft-combining (precisely, the combining effect of this approach is smaller compared to soft-combining).

According to the third embodiment of the present invention, the mobile station may only receive necessary broadcast channel information. Therefore, it is possible to reduce the amount of information received by the mobile station on the broadcast channel, to reduce power consumption, and to achieve fast cell selection. For example, the mobile station can determine whether it changes sectors based on a cell ID and neighboring cell information detected during the cell search.

In addition, soft-combining can improve reception quality, because signals transmitted from multiple sectors can be combined (without interference). In other words, the base station can reduce transmission power or radio resource blocks (time intervals or frequency blocks) in order to achieve the same quality level.

Although broadcast channel information is classified into multiple pieces of broadcast channel information in the third embodiment, the broadcast channel information may be categorized into multiple blocks (sector-specific broadcast channel block, base-station specific broadcast channel block, and so on). Even though the single broadcast channel is used, the mobile station can receive system information included in a predetermined broadcast channel block. This approach can achieve the effect similar to the third embodiment.

According to an embodiment of the present invention, it is possible to reduce the amount of information received by a mobile station on a broadcast channel or a primary broadcast channel.

## Claims

1. A base station (10):
a system information generating unit (101) configured to generate system information;
a system information categorizing unit (103) configured to categorize the system information into multiple pieces of system information; and
a multiplexing unit (109) configured to multiplex the categorized multiple pieces of system information into multiple channels or multiple blocks;
**characterized in that**
the system information categorizing unit (103) is adapted to categorize the system information into first system information required for establishing a connection between a mobile station and the base station and second system information other than the first system information, and
the multiplexing unit (109) is adapted to multiplex the first system information into a channel whose frequency block and timing are predetermined, and to multiplex the second system information into another channel which is different from the channel into which the first system information is multiplexed.

2. The base station (10) as claimed in Claim 1, wherein:
the first system information includes information about the channel into which the second system information is multiplexed.

3. The base station (10) as claimed in Claim 1, wherein:
the first system information includes at least one of
a system frame number,
a system bandwidth,
a network ID,
a cell ID, and
the number of transmitting antennas.

4. A base station (10), **characterized by**:
a system information generating unit (101) configured to generate system information;
a system information categorizing unit (103) configured to categorize the system information into multiple pieces of system information; and
a multiplexing unit (109) configured to multiplex the categorized multiple pieces of system information into multiple channels or multiple blocks;
**characterized in that**
the system information categorizing unit (103) is adapted to categorize the system information into first system information which is specific to a first component in a radio network configuration and second system information which is specific to a second component in the radio network configuration, and the multiplexing unit (109) is adapted to multiplex the first system information into a channel whose frequency block and timing are predetermined and to multiplex the second system information into another channel which is different from the channel into which the first system information is multiplexed.

5. The base station (10) as claimed in Claim 4, wherein:
the system information categorizing unit (103) is adapted to categorize the system information based on predetermined configuration information about the channel into which the first system information is multiplexed.

6. The base station (10) as claimed in Claim 4, wherein:
the multiplexing unit (109) is adapted to add configuration information about the channel into which the first system information is multiplexed to the first system information.

7. The base station (10) as claimed in any one of Claims 1-6, wherein
the system information categorizing unit (103) is adapted to categorize the second system information into multiple pieces of information; and
the multiplexing unit (109) is adapted to multiplex the categorized multiple pieces of information into different channels.

8. The base station (10) as claimed in any one of Claims 1-7, wherein
the multiplexing unit (109) is adapted to transmit the channel into which the first system information is multiplexed in a shorter time interval than the channel into which the second system information is multiplexed.

9. A communication method comprising the steps of:
- generating system information;
- categorizing the system information into multiple pieces of system information;
- multiplexing the categorized multiple pieces of system information into multiple channels or multiple blocks;
**characterized in that**
- the categorizing step comprises categorizing the system information into first system information required for establishing a connection between a mobile station and a base station and second system information other than the first system information, and
- the multiplexing step comprises multiplexing the first system information into a channel whose frequency block and timing are predetermined, and multiplexes the second system information into another channel which is different from the channel into which the first system information is multiplexed.

10. A communication method comprising the steps of:
- generating system information;
- categorizing the system information into multiple pieces of system information;
- multiplexing the categorized multiple pieces of system information into multiple channels or multiple blocks;
**characterized in that**
- the categorizing step comprises categorizing the system information into first system information which is specific to a first component in a radio network configuration and second system information which is specific to a second component in the radio network configuration, and
- the multiplexing step comprises multiplexing the first system information into a channel whose frequency block and timing are predetermined and multiplexes the second system information into another channel which is different from the channel into which the first system information is multiplexed.

## Patentansprüche

1. Basisstation (10):
eine Systeminformationen-Erzeugungseinheit (101), welche dafür konfiguriert ist, Systeminformationen zu erzeugen;
eine Systeminformationen-Kategorisierungseinheit (103), welche dafür konfiguriert ist, die Systeminformationen in mehrere Teile von Systeminformationen zu kategorisieren; und
eine Multiplexiereinheit (109), welche dafür konfiguriert ist, die kategorisierten mehreren Teile von Systeminformationen in mehrere Kanäle oder mehrere Blöcke zu multiplexieren;
**dadurch gekennzeichnet, dass**
die Systeminformationen-Erzeugungseinheit (103) dafür geeignet ist, die Systeminformationen in erste Systeminformationen, welche zum Aufbauen einer Verbindung zwischen einer Mobilstation und der Basisstation benötigt werden, und zweite Systeminformationen zu kategorisieren, die andere als die ersten Systeminformationen sind, und
die Multiplexiereinheit (109) dafür geeignet ist, die ersten Systeminformationen in einen Kanal zu multiplexieren, dessen Frequenzblock und zeitliche Ablaufplanung vorgegeben sind, und die zweiten Systeminformationen in einen anderen Kanal zu multiplexieren, welcher sich von dem Kanal unterscheidet, in welchen die ersten Systeminformationen multiplexiert werden.

2. Basisstation (10) nach Anspruch 1, wobei:
die ersten Systeminformationen Informationen über den Kanal umfassen, in welchen die zweiten Systeminformationen multiplexiert werden.

3. Basisstation (10) nach Anspruch 1, wobei:
die ersten Systeminformationen mindestens eines aus
einer Systemrahmenzahl;
einer Systembandbreite;
einer Netzkennung;
einer Zellenkennung und
der Anzahl sendender Antennen umfassen.

4. Basisstation (10), **gekennzeichnet durch**:
eine Systeminformationen-Erzeugungseinheit (101), welche dafür konfiguriert ist, Systeminformationen zu erzeugen;
eine Systeminformationen-Kategorisierungseinheit (103), welche dafür konfiguriert ist, die Systeminformationen in mehrere Teile von Systeminformationen zu kategorisieren; und
eine Multiplexiereinheit (109), welche dafür konfiguriert ist, die kategorisierten mehreren Teile von Systeminformationen in mehrere Kanäle oder mehrere Blöcke zu multiplexieren;
**dadurch** gekennzeichnet, dass
die Systeminformationen-Erzeugungseinheit (103) dafür geeignet ist, die Systeminformationen in erste Systeminformationen, welche für eine erste Komponente in einer Funknetzkonfiguration spezifisch sind, und zweite Systeminformationen zu kategorisieren, welche für eine zweite Komponente in der Funknetzkonfiguration spezifisch sind, und
die Multiplexiereinheit (109) dafür geeignet ist, die ersten Systeminformationen in einen Kanal zu multiplexieren, dessen Frequenzblock und zeitliche Ablaufplanung vorgegeben sind, und die zweiten Systeminformationen in einen anderen Kanal zu multiplexieren, welcher sich von dem Kanal unterscheidet, in welchen die ersten Systeminformationen multiplexiert werden.

5. Basisstation (10) nach Anspruch 4, wobei:
die Systeminformationen-Kategorisierungseinheit (103) dafür geeignet ist, die Systeminformationen auf der Grundlage von vorgegebenen Konfigurationsinformationen über den Kanal zu kategorisieren, in welchen die ersten Systeminformationen multiplexiert werden.

6. Basisstation (10) nach Anspruch 4, wobei:
die Multiplexiereinheit (109) dafür geeignet ist, den ersten Systeminformationen Konfigurationsinformationen über den Kanal hinzuzufügen, in welchen die ersten Systeminformationen multiplexiert werden.

7. Basisstation (10) nach einem der Ansprüche 1 bis 6, wobei
die Systeminformationen-Kategorisierungseinheit (103) dafür geeignet ist, die zweiten Systeminformationen in mehrere Teile von Informationen zu kategorisieren; und
die Multiplexiereinheit (109) dafür geeignet ist, die kategorisierten mehreren Teile von Systeminformationen in verschiedene Kanäle zu multiplexieren.

8. Basisstation (10) nach einem der Ansprüche 1 bis 7, wobei
die Multiplexiereinheit (109) dafür geeignet ist, den Kanal, in welchen die ersten Systeminformationen multiplexiert werden, in einem kürzeren Zeitintervall als den Kanal zu senden, in welchen die zweiten Systeminformationen multiplexiert werden.

9. Kommunikationsverfahren, welches die folgenden Schritte umfasst:
- Erzeugen von Systeminformationen;
- Kategorisieren der Systeminformationen in mehrere Teile von Systeminformationen;
- Multiplexieren der kategorisierten mehreren Teile von Systeminformationen in mehrere Kanäle oder mehrere Blöcke;
**dadurch gekennzeichnet, dass**
- der Kategorisierungsschritt das Kategorisieren der Systeminformationen in erste Systeminformationen, welche zum Aufbauen einer Verbindung zwischen einer Mobilstation und einer Basisstation benötigt werden, und zweite Systeminformationen umfasst, die andere als die ersten Systeminformationen sind, und
- der Multiplexierschritt das Multiplexieren der ersten Systeminformationen in einen Kanal, dessen Frequenzblock und zeitliche Ablaufplanung vorgegeben sind, und das Multiplexieren der zweiten Systeminformationen in einen anderen Kanal umfasst, welcher sich von dem Kanal unterscheidet, in welchen die ersten Systeminformationen multiplexiert werden.

10. Kommunikationsverfahren, welches die folgenden Schritte umfasst:
- Erzeugen von Systeminformationen;
- Kategorisieren der Systeminformationen in mehrere Teile von Systeminformationen;
- Multiplexieren der kategorisierten mehreren Teile von Systeminformationen in mehrere Kanäle oder mehrere Blöcke;
**dadurch gekennzeichnet, dass**
- der Kategorisierungsschritt das Kategorisieren der Systeminformationen in erste Systeminformationen, welche für eine erste Komponente in einer Funknetzkonfiguration spezifisch sind, und zweite Systeminformationen umfasst, welche für eine zweite Komponente in der Funknetzkonfiguration spezifisch sind, und
- der Multiplexierschritt das Multiplexieren der ersten Systeminformationen in einen Kanal, dessen Frequenzblock und zeitliche Ablaufplanung vorgegeben sind, und das Multiplexieren der zweiten Systeminformationen in einen anderen Kanal umfasst, welcher sich von dem Kanal unterscheidet, in welchen die ersten Systeminformationen multiplexiert werden.

## Revendications

1. Station de base (10) :
une unité de génération d'informations système (101) configurée pour générer des informations système ;
une unité de catégorisation d'informations système (103) configurée pour catégoriser les informations système en plusieurs éléments d'informations système ; et
une unité de multiplexage (109) configurée pour multiplexer les plusieurs éléments catégorisés d'informations système dans plusieurs canaux ou plusieurs blocs ;
**caractérisée en ce que**
l'unité de catégorisation d'informations système (103) est adaptée pour catégoriser les informations système en des premières informations système requises pour établir une connexion entre une station mobile et la station de base et en des deuxièmes informations système autres que les premières informations système, et
l'unité de multiplexage (109) est adaptée pour multiplexer les premières informations système dans un canal dont la temporisation et le bloc de fréquences sont prédéterminés, et pour multiplexer les deuxièmes informations système dans un autre canal qui est différent du canal dans lequel les premières informations système sont multiplexées.

2. Station de base (10) telle que revendiquée dans la revendication 1, dans laquelle :
les premières informations système comportent des informations concernant le canal dans lequel les deuxièmes informations système sont multiplexées.

3. Station de base (10) telle que revendiquée dans la revendication 1, dans laquelle :
les premières informations système comportent au moins un élément parmi
un numéro de trame système,
une largeur de bande de système,
un ID réseau,
un ID cellule, et
le nombre d'antennes d'émission.

4. Station de base (10), **caractérisée par** :
une unité de génération d'informations système (101) configurée pour générer des informations système ;
une unité de catégorisation d'informations système (103) configurée pour catégoriser les informations système en plusieurs éléments d'informations système ; et
une unité de multiplexage (109) configurée pour multiplexer les plusieurs éléments catégorisés d'informations système dans plusieurs canaux ou plusieurs blocs ;
**caractérisée en ce que**
l'unité de catégorisation d'informations système (103) est adaptée pour catégoriser les informations système en des premières informations système qui sont spécifiques à un premier composant dans une configuration de réseau radio et en des deuxièmes informations système qui sont spécifiques à un deuxième composant dans la configuration de réseau radio, et
l'unité de multiplexage (109) est adaptée pour multiplexer les premières informations système dans un canal dont la temporisation et le bloc de fréquences sont prédéterminés et pour multiplexer les deuxièmes informations système dans un autre canal qui est différent du canal dans lequel les premières informations système sont multiplexées.

5. Station de base (10) telle que revendiquée dans la revendication 4, dans laquelle :
l'unité de catégorisation d'informations système (103) est adaptée pour catégoriser les informations système sur la base d'informations de configuration prédéterminées concernant le canal dans lequel les premières informations système sont multiplexées.

6. Station de base (10) telle que revendiquée dans la revendication 4, dans laquelle :
l'unité de multiplexage (109) est adaptée pour ajouter des informations de configuration concernant le canal dans lequel les premières informations système sont multiplexées aux premières informations système.

7. Station de base (10) telle que revendiquée dans l'une quelconque des revendications 1 à 6, dans laquelle
l'unité de catégorisation d'informations système (103) est adaptée pour catégoriser les deuxièmes informations système en plusieurs éléments d'informations ; et
l'unité de multiplexage (109) est adaptée pour multiplexer les plusieurs éléments catégorisés d'informations dans différents canaux.

8. Station de base (10) telle que revendiquée dans l'une quelconque des revendications 1 à 7, dans laquelle
l'unité de multiplexage (109) est adaptée pour transmettre le canal dans lequel les premières informations système sont multiplexées dans un intervalle de temps plus court que le canal dans lequel les deuxièmes informations système sont multiplexées.

9. Procédé de communication comprenant les étapes qui consistent :
à générer des informations système ;
à catégoriser les informations système en plusieurs éléments d'informations système ;
à multiplexer les plusieurs éléments catégorisés d'informations système dans plusieurs canaux ou plusieurs blocs ;
**caractérisé en ce que**
l'étape de catégorisation comprend le fait de catégoriser les informations système en des premières informations système requises pour établir une connexion entre une station mobile et une station de base et en des deuxièmes informations système autres que les premières informations système, et
l'étape de multiplexage comprend le fait de multiplexer les premières informations système dans un canal dont la temporisation et le bloc de fréquences sont prédéterminés, et multiplexe les deuxièmes informations système dans un autre canal qui est différent du canal dans lequel les premières informations système sont multiplexées.

10. Procédé de communication comprenant les étapes qui consistent :
à générer des informations système ;
à catégoriser les informations système en plusieurs éléments d'informations système ;
à multiplexer les plusieurs éléments catégorisés d'informations système dans plusieurs canaux ou plusieurs blocs ;
**caractérisé en ce que**
l'étape de catégorisation comprend le fait de catégoriser les informations système en des premières informations système qui sont spécifiques à un premier composant dans une configuration de réseau radio et en des deuxièmes informations système qui sont spécifiques à un deuxième composant dans la configuration de réseau radio, et
l'étape de multiplexage comprend le fait de multiplexer les premières informations système dans un canal dont la temporisation et le bloc de fréquences sont prédéterminés et multiplexe les deuxièmes informations système dans un autre canal qui est différent du canal dans lequel les premières informations système sont multiplexées.
